# EUROPEAN PATENT APPLICATION

(11) **EP 2 266 490 A1**
(43) Date of publication of application: **29.12.2010**
(21) Application number: 09380124.9
(22) Date of filing: 24.06.2009
(51) Int. Cl.: A61C 1/08

(54) **Method for making a dental implant template, and use of such templates on partially edentulous patients**

(71) Applicant: Martinez Orcajo, Rodrigo, 28015 Madrid (ES)
(72) Inventor: Martinez Orcajo, Rodrigo, 28015 Madrid (ES)
(74) Representative: Ibanez Gonzalez, José Francisco

(57) **Abstract**

Method of manufacturing a dental implant template, and use of the templates thus obtained in partially edentulous patients. According to the invention, in all the steps of the method consideration is made of the presence of dental pieces that in a last surgical act will be extracted. In particular, the method is based on the manufacture of a modified radiological template, a first surgical template and a second surgical template, always respecting those original dental pieces of the patient that will be kept and by planning the implants to perform in order to support the new dental pieces.

## Description

The invention of the present application relates to a method of manufacturing a dental implant template, in particular of the type known as a surgical template, for the implant of dental pieces in the maxillary bones of a patient. The application also relates to the use of the templates thus obtained for performing dental implants in partially edentulous patients.

In order to remedy the absence or defective aspect of dental pieces in human patients, different techniques and solutions have been employed. In general, when absence or defect involves a relatively high number of pieces, the solution relies on artificial dentures that are immobilized in the maxillaries through different means. Such means of fastening are not exempt of problems and, for that reason day by day is increasingly extended the use of the so called dental implants, in which a rod or sleeve made in a suitable material (metal) is firmly inserted -implanted- in the bone tissue of the maxillary or maxillaries of the patient. The implanted rod is conformed to be able to receive, for example by means of threading, a pillar or screw to which the suitably designed prosthesis will be secured in order to replace the absent or defective dental piece or pieces.

Insertion and securing of implants in maxillary bones is a surgical operation that requires a high degree of skill from the side of the clinical professional and a high precision in the elements and tools employed. For example when making the drill that will lodge the implant and for suitably positioning (angle, height, etc.) the pillar that later will give support to the prosthesis.

One of the tools to help in this operation being made with the required precision are the templates, that properly manufactured will be located on the maxillaries of the patient and will allow the correct insertion of implants and the suitable location or direction of the pillars and later prosthesis. These templates are made by laboratories or specialized manufacturers, following the instructions of the professional assisted by other clinical agents.

In order to carry out the several assays and necessary tests during manufacture of the templates without disturbing repeatedly the patient, intra-oral models of the mouth of the patient are used.

According to the present state of the art, the manufacture of a surgical template suitable for the insertion of a dental implant and later securing of prosthesis in maxillaries of a patient, is carried out through the following steps:
a) Initial exploration of the patient to verify whether he/she is apt for the accomplishment of the technique of implants.
   This exploration will be:
   - Extra-oral. For example in order to determine the natural aesthetic components of face and dental types of the patient.
   - Intra-oral. For example in order to determine the presence of one or more damaged or defective teeth that should have to be extracted, or in order to verify the capacity of stabilization of the future radiological or surgical template in the mouth of the patient.
b) Planning of a radiological template (RT) and obtainment of models of the mouth of the patient.
c) Manufacture of the RT.
d) Manufacture of the radiological index (RI). This is a structural mould made of rigid material that serves to hold the correct position of the RT in later steps.
e) First tomography. It will be performed over the patient in rest and with the RT stabilized in the mouth by means of the RI.
f) Second tomography. It will be made exclusively over the RT.
g) Data from the tomographies will be provided to in archives type i.e. DICOM by a suitable readable support (CD, USB, etc.).
h) Planning of the surgical template (ST). By computer means, using software available in the market, for example *Nobel-Guide* and/or *Procera* (commercial names of Nobel Biocare) the data and images of the topographies are gotten up in order to define the ST. The manufacturer makes the ST.
i) In case of fragility of the ST, reinforcements will be added. Casting of templates. Assembly of pillars and manufacture of the provisional prosthesis.
j) Surgery of implants in patient.
k) Securing of the provisional prostheses.

This method of the state of the art presents, nevertheless, some disadvantages or limitations during its application.

For example, in current practice, it is only directly and immediately applicable to completely edentulous patients or, when they are partially edentulous patients, the existing dental pieces must be healthy and aesthetically acceptable. Where damaged or defective dental pieces exist, these must be extracted before beginning all the protocol of implants, and then waiting for healing of the corresponding breaches in the gums, which can mean a delay of several months, in addition to the consequent disturbances and expenses for the patient in provisional prosthesis or dentures during that interval.

On the other hand, when the patient keeps one or more dental pieces, the requirements of quality in the fastening and precision of implants, pillars and prosthesis is still increased, since the adjustment in proximity, angle and height between original pieces and implanted pieces not only must be mechanical and aesthetically correct, but to allow the patient to keep his/her habits and sensations of mastication, language, etc.

Therefore, a first object of the invention is to provide a method of manufacturing a template for dental implants that overcomes the above-mentioned disadvantages of the state of the art.

Another aim of the invention is to propose the use of the templates obtained according to the method of the invention for the achievement of implants in partially edentulous patients and that such implant could be made in a single surgical act.

These objectives are reached by means of the application of the technical solutions and use of the means that are described below.

For a better understanding of the method of the invention, here follows a detailed description of a preferable form of carrying out this method making use of a comparison with the equivalent steps of the state of the art, showing the differences between both methods and the additional characteristics of the method of the invention.

In accordance with the invention, in the step (a) corresponding to the intra-oral exploration of the mouth of the patient, there are detected and identified, but not extracted, the damaged or defective teeth of the patient. Therefore, the step (b) for planning of the RT and obtainment of models of the mouth of the patient, the step (c) of manufacture of the RT and the step (d) of manufacture of the RI, will correspond with steps respectively (b'), (c') and (d') that are carried out independently of the presence of possible damaged pieces that may require their later extraction. In this way a valuable record of the original mechanical and aesthetic characteristics of the set of teeth of the patient is kept.

In addition, in accordance with the invention, the step (e) of accomplishment of the first tomography on the mouth of patient and the RT is followed by a step (e1):
e1) By means of a specific and particular software that uses the data and images of the first tomography, in the initial RT will be introduced the necessary modifications derived from the fact that consideration is given to the presence of eventual dental pieces that later will have to be extracted. In this manner, a modified radiological template (MRT) is planned and designed.

Consequently, the step (f) of accomplishment of the second tomography will be made according to (f') exclusively based on the MRT.

For the same reason, according to the invention, the step (h) of planning and manufacture of the ST will be made on the MRT basis.

As above mentioned, one of the objectives of the invention is to allow the accomplishment of dental implants keeping and respecting the healthy original dental pieces of the patient. By this reason, the mechanical and aesthetic adjustment between adjacent original and implanted pieces is very important.

To such aim the step (h) relating to the manufacture of the ST, in the method of the invention becomes a step (h1):
h1) From the data based on the MRT, by means of conventional software a first surgical template (ST1) is planned and manufactured comprising part of the total implants foreseen.

Due to the reasons of precision above exposed, stabilization and securing of this ST1 in the mouth of the patient is very important. In order to assure this stabilization, the ST1 will present a configuration corresponding to a part of the total number of implants foreseen. This number will be preferably of two or more implants and in spaced or nonadjacent positions, if possible, in order to define a wide plane of stabilization of the ST1 in the mouth of the patient.

Consequently, according to the invention, it will follow a step (h2):
h2) After verifying suitable stabilization of ST1 a second surgical template (ST2) is defined and manufactured comprising all the implants foreseen.

It should be understood that from this moment ST1 and ST2 would play a very important role for the process of implanting, especially in the final surgical act. By such reason, in accordance with the invention, there will follow the steps:
i1) If brittle points in ST1 or ST2 were noticed reinforcements will be added, always without jeopardizing the stabilization of the templates (ST1, ST2) in the mouth of the patient.

Suitable materials available in the market for making such reinforcements are, for example, *Pattern Resin*^{®} (GC America, Inc.), *Duralay*^{®} (Dental Reliance Mfg. Co.) or *Delta*^{®} (Dental Kuss).
i2) Casting of ST2 incorporating the replica of the implants and the guiding elements. Subsequent assembly in the models of the mouth with the ST2 and the RI.

The replica of implants and the guiding elements (sleeves, screws, etc.) are well known in the art. The importance of this step, according to the method of the invention, relies on the constant remission to the original mechanical and aesthetic characteristics of the set of teeth of the patient, which in many occasions could still be improved.
i3) - Selection of the pillars to secure into each one of the implants in agreement with the configuration of ST1 and ST2. Assembly of the selected pillars and manufacture of the provisional prosthesis.

For the selection of pillars, software available in the market can be used, for example *Multi-unit*^{®} (Nobel Biocare). In this step, it is important to consider the height of gum of the patient and to correct as far as possible the disparallelism between implants. The prosthesis to secure later will be, in general, of provisional type. The definitive prosthesis will be delayed until settlement of implants and habitual comfort of the patient.

The last step of the process of implant will consist of the surgical act to insert implants in the bony tissue of maxillary or maxillaries of the patient. In fact, this step is not an essential aspect of the method of making dental implants templates of the invention. However, the steps that form this stage are important in order to show and confirm the advantages of using the method of the invention and the templates thus made in dental implants designed for partially edentulous patients in a single surgical act.

In accordance with the invention, the method has into account the dental pieces that will have to be extracted and is respectful with those natural dental pieces of the patient that will remain. This gives rise to the following steps in the process of implant:
j1) Extraction of the dental pieces eventually affected by the configuration of implants foreseen in ST1. Stabilization of ST1 in the mouth of the patient and insertion of the implants corresponding to this ST1.
j2) - Extraction of the rest of the foreseen dental pieces. Stabilization of ST2 in the mouth of the patient and insertion of the rest of implants.

It should be understood, when original dental pieces are kept, that could be necessary a slight mechanical adaptation between dental pieces adjacent to the ones implanted.

The following table illustrates in summarized and comparative form the steps corresponding to the method of the state of the art and to the method of the invention, in order to facilitate the understanding of the differences between both methods.

| **Step** | **State of the art** | **Step** | **Invention** |
|---|---|---|---|
| a | - Initial exploration of the patient | a | - Id. |
| - x | - If the patient presents damaged dental pieces: surgery of extraction of these pieces | | |
| | - Delay process until healing | | |
| b | - Planning of the radiological template (RT) and obtainment of models of the mouth of the patient | b' | - Planning of the RT, independently of the presence of damaged dental pieces, and obtainment of models of the mouth of the patient |
| c | - Manufacture of the RT | c' | - Id. independently of the presence of damaged pieces |
| d | - Manufacture of the radiological index (RI) | d' | - Id. independently of the presence of damaged pieces |
| e | - First tomography. On the patient with the RT stabilized by means of the RI | e | - Id. |
| | | e1 | By means of a specific and particular software that uses the data and images of the first tomography, in the initial RT will be introduced the necessary modifications derived from the fact that consideration is given to the presence of eventual dental pieces that later will have to be extracted. In this manner, a modified radiological template (MRT) is planned and designed |
| f | - Second tomography on the RT exclusively | f | - Id. on the MRT exclusively |
| g | - Reception of data of both topographies in archives type DICOM in a suitable readable support | g | - Id. |
| h | - Planning of the surgical template (ST). By means of software available in the market, the data and images of the topographies are gotten up on the RT to define ST | h1 | - From the data based on the MRT, by means of a conventional software a first surgical template (ST1) is planned comprising part of the total implants foreseen |
| | - The manufacturer makes ST | | - The manufacturer makes ST1 |
| | | h2 | - After verifying the suitable stabilization of ST1 a second surgical template (ST2) is defined and manufactured with all the implants foreseen |
| i | - In case of fragility of the ST addition of reinforcements. Casting of templates. Assembly of pillars and manufacture of the provisional prosthesis | i1 | - If brittle points in ST1 or ST2 were noticed reinforcements will be added |
| | | i2 | - Casting of ST2 incorporating the replica of implants and guiding elements |
| | | | - Assembly on the models with ST2 and RI |
| | | i3 | - Selection of the pillars to insert in each one of the implants in agreement with the configuration of ST1 and ST2 |
| | | | - Assembly of the selected pillars |
| | | | - Manufacture of provisional prosthesis |
| j | - Surgery of implants in patient | j1 | - Extraction of the dental pieces eventually affected by the configuration of implants foreseen in ST1 |
| | | | - Stabilization of ST1 in the mouth of the patient |
| | | | - Insertion of the implants corresponding to this ST1 |
| | | j2 | - Extraction of the rest of the dental pieces foreseen |
| | | | - Stabilization of ST2 in the mouth of the patient |
| | | | - Insertion of the rest of implants |
| k | - Securing of the provisional prosthesis | k | - Securing of the provisional prosthesis |

| | | | |
|---|---|---|---|
| RT = Radiological Temp!ate RI = Radiological Index MRT = Modified Radiological Template ST = Surgical Template ST1 = First Surgical Template ST2 = Second Surgical Template | | | |

## Claims

1. Method of making a dental implant template, **characterized in that** it comprises the following steps:
- Intra-oral exploration of the mouth of the patient through which are detected and identified, but not extracted, the teeth damaged or defective of the patient.
- Planning of the radiological template (RT), independently of the presence of damaged dental pieces, and obtainment of models of the mouth of the patient.
- Manufacture of the RT with independence of the presence of damaged pieces.
- Manufacture of the radiological index (RI) independently of the presence of damaged pieces.
- First tomography. Made on the patient with the RT stabilized by means of the RI.
- By means of a specific and particular software that uses the data and images of the first tomography, in the initial RT will be introduced the necessary modifications derived from the fact that consideration is given to the presence of eventual dental pieces that later will have to be extracted. In this manner a modified radiological template (MRT) is planned and manufactured.
- Second tomography based on the MRT exclusively.
- Reception of data of both tomographies in archives type DICOM in a suitable readable support.
- From the data based on the MRT, by means of conventional software a first surgical template (ST1) is planned and manufactured comprising part of the total implants foreseen.
- After verifying suitable stabilization of ST1 a second surgical template (ST2) is defined and manufactured comprising all the implants foreseen.
- If brittle points in ST1 or ST2 were noticed reinforcements will be added.
- Casting of the ST2 incorporating the replica of implants and the guiding elements. Assembly on the models with the ST2 and the RI.
- Selection of the pillars to mount in each one of the implants in agreement with the configuration of ST1 and ST2. Assembly of the selected pillars. Manufacture of the provisional prosthesis.

2. Method of making a dental implant template, according to claim 1, **characterized in that** the first surgical template (ST1) comprises preferably two or more implants in spaced or nonadjacent position.

3. Method of making a dental implant template, according to claims 1 and 2, **characterized in that** the second surgical template (ST2) comprises preferably the rest of implants foreseen.

4. **A** surgical template manufactured according to the method of claims 1 to 3.

5. The use of the method of claims 1 to 3 for the manufacture of a template suitable to perform implants in partially edentulous patients.

6. The use of the method of claims 1 to 3 for the manufacture of a template suitable to perform implants in partially edentulous patients through a single surgical act.
